# EUROPÄISCHE PATENTSCHRIFT

(11) **EP 2 256 326 B1**
(45) Veröffentlichungstag und Bekanntmachung des Hinweises auf die Patenterteilung: **07.11.2018**
(21) Anmeldenummer: 10003607.8
(22) Anmeldetag: 31.03.2010
(51) Int. Cl.: F02D 41/22, F02P 17/12, G01L 23/22

(54) **Verfahren und Vorrichtung zur Erkennung einer fehlerhaften Funkenbildung einer Fremdgezündeten Brennkraftmaschine mit einem oder mehreren Zylindern**
Method and device for recognising faulty spark formation of an externally ignited combustion engine with one or more cylinders
Procédé et dispositif de détection d'une formation d'étincelle défectueuse dans un moteur à combustion interne à allumage commandé doté d'un ou plusieurs cylindres

(30) Priorität: 19.05.2009 DE 102009021932
(43) Veröffentlichungstag der Anmeldung: 01.12.2010
(73) Patentinhaber: Bayerische Motoren Werke Aktiengesellschaft, 80809 München (DE)
(72) Erfinder: Zellinger, Franz, 85579 Neubiberg (DE); Hofstetter, Franz, 84072 Au (DE); Bettendorf, Joachim, 85406 Zolling (DE)

(56) Entgegenhaltungen:
- WO-A1-2007/054416
- DE-A1- 4 116 642
- DE-B3-102007 024 415
- JP-A- 2000 145 606
- US-A- 5 334 938

## Beschreibung

Die Erfindung betrifft ein Verfahren und eine Vorrichtung zur Erkennung einer fehlerhaften Funkenbildung einer fremdgezündeten Brennkraftmaschine mit einem oder mehreren Zylindern.

Fehlerhafte Funkenbildungen können aufgrund verschiedener Ursachen entstehen, z. B. bei Unregelmäßigkeiten im Brennraum (Glühzündungen, Rußanhäufungen ...), oder im Zusammenhang mit Fehlern bei Zündspulen bzw. Zündkerzen. Glühzündungen sind unkontrollierte Entflammungsvorgänge, bei denen die Temperatur im Brennraum an einer Stelle so stark ansteigen kann, dass schwere Schäden an der Brennkraftmaschine (Motor) und an Zündkerzen auftreten können. Es handelt sich um unerwünschte Reaktionsabläufe, die eine Verbrennung einleiten, die nicht von einem Fremdzündereignis, d.h. von der Motorsteuerung bzw. der Zündanlage vorgegebenen Zündfunken einer Zündkerze ausgeht. Auslöser sind überhitzte Bauteile, wie z.B. Elektroden von Zündkerzen, Auslassventile, scharfe, überhitzte Kanten im Brennraum oder zu heiße Brennraumwände. Ursachen für Glühzündungen können auch Ablagerungen im Brennraum sein, die sich aus Verbrennungsrückständen von Kraftstoffen und Öl bilden. Voraussetzung für Glühzündungen sind lokale Temperaturen an Bauteilen oder von Ablagerungen, die mindestens 1100 bis 1200 °C betragen. Das sind Temperaturen, die weit über der Selbstzündung des Kraftstoff-Luft-Gemisches liegen. Sollten bei niederen Temperaturen Glühzündungen eingeleitet werden, erlöschen sie wieder durch die kühlende Wirkung des benachbarten Gemisches und an den relativ kalten Brennraumwänden.

Eine der häufigsten Ursachen für Glühzündungen sind Öl, Asche und Rückstände aus dem Kraftstoff. Dabei lagern sich die Verbrennungsrückstände an den Brennraumwänden und auf dem Kolbenboden an. Sie können sich auch ablösen und als sogenannte Hot-Spots im Brennraum vagabundieren. Bei Glühzündungen wirkt die entstehende Verbrennung bzw. die dabei entstehende Flamme somit unkontrolliert auf die Bauteile ein, wodurch die Temperatur im Kolben stark ansteigt und bei ununterbrochener Glühzündung den Schmelzpunkt des Kolbenmaterials schon nach wenigen Sekunden erreichen kann.

Aus der Druckschrift DE 10 2007 024 415 B3 geht ein Verfahren zur Erkennung von Glühzündungen hervor, gemäß dem eine Drehgeschwindigkeit der Kurbelwelle während eines Verdichtungstaktes des Zylinders während eines ersten Zeitintervalls im Arbeitsablauf der Brennkraftmaschine gemessen wird. Ferner wird ein Klopfsignal während eines Arbeitstaktes des Zylinders während eines zweiten Zeitintervalls im Arbeitsablauf der Brennkraftmaschine ermittelt. Eine Glühzündung des Zylinders wird dann erkannt, wenn die Drehgeschwindigkeit der Kurbelwelle gegenüber einem Vergleichswert verlangsamt ist und aufgrund des Klopfsignals eine klopfende Verbrennung erkannt wird.

Aus den Druckschriften US 5,632,247 A und EP 0 819 925 A2 gehen Vorrichtungen und Verfahren zur Erkennung von Glühzündungen hervor, die auf einer Erfassung und Auswertung von Zündzeiten und mechanischen Vibrationen der einzelnen Zylinder beruhen. Dabei wird eine Glühzündung anhand von Zeitdifferenzen zwischen dem zeitlichen Verlauf der Zündung und dem zeitlichen Verlauf der erfassten Vibrationen erkannt.

Aus der Druckschrift DE 10 2006 015 662 A1 geht ein Verfahren zum Betreiben einer Brennkraftmaschine hervor, bei dem Glühzündungen (Vorentflammungen) auf Basis einer Auswertung von mittels Klopfsensoren an den Zylindern erfassten Körperschallsignalen erfolgt.

Aus der DE 198 59 310 A1 geht eine Vorrichtung zur Erkennung von Glühzündungen (Vorentflammung) hervor, die eine lonenstrom-Erfassungsvorrichtung zum direkten oder indirekten Erfassen eines Inonenstroms im Brennraum umfasst. Ein zu einer bestimmten Kurbelwellenstellung vor dem Zündzeitpunkt oberhalb eines zu definierenden Schwellwertes liegender lonenstrom wird dabei als Glühzündung erkannt. Derartige lonenstrom-Erfassungseinheiten gehen weiterhin bspw. aus den Druckschriften DE 187 20 535 C2, DE 42 32 845 C2 und DE 44 10 063 C2 hervor. Bekanntlich führt die Verbrennung eines Kraftstoff-Luft-Gemisches im Brennraum des Zylinders dazu, dass Moleküle ionisiert werden. Bei den lonenstrom-Erfassungseinheiten wird typischerweise eine relativ hohe Spannung, z.B. knapp nach der Zündung über die Elektroden einer Zündkerze, angelegt, um einen Strom zwischen den Elektroden zu erzeugen. Dieser Strom wird als lonenstrom bezeichnet. Der fließende lonenstrom ist proportional zu der Anzahl der zwischen den Elektroden vorliegenden Ionen. Das Niveau eines solchen lonenstroms ist Maß für das Niveau der Ionisierung über den gesamten Zylinder während der Verbrennung. Das Gleichstromniveau oder die Menge des lonenstroms gibt die Qualität des Verbrennungsereignisses an, oder ob überhaupt eine Verbrennung stattgefunden hat (z.B. bei einer Fehlzündung). Eine Wechselstromkomponente des lonenstroms kann ausgewertet werden, um das Vorliegen von Klopfen zu bestimmen. Der lonenerfassungsansatz ist für Motoren mit beliebiger Anzahl von Zylindern und verschiedenen Motordrehzahllastkombinationen wirksam und erlaubt wie beispielsweise in der Druckschrift DE 603 12757 T2 ausgeführt einen Rückschluss auf Glühzündungen.

Ein weiteres Verfahren zum Erkennen von Fehlzündungen in Fremdgezündeten Brennkraftmaschinen ist durch die Patentschrift US 5 334 938 gegeben. Die bekannten Methoden zur Glühzündungserkennung sind insbesondere für leistungsstarke Brennkraftmaschinen nicht ausreichend zuverlässig. Glühzündungen können bspw. so früh vor dem korrekten Zündzeitpunkt entstehen, dass sie nicht in dem durch eine Glühzündungsdiagnose erwarteten Zeitfenster liegen. Man spricht hierbei von dem sogenannten "Klopffenster". Das Klopffenster ist der Bereich einer Motorumdrehung, in dem die Klopferfassung bzw. -regelung den Geräuschpegel des Verbrennungsereignisses erfasst und auswertet. Eine weitere Auswertung des zeitlichen Diagnosebereichs ist nur begrenzt möglich, da hier bereits die Einflüsse andere Zylinder stören. Zusätzlich ist das durch die Glühzündung resultierende Signal nicht immer ausreichend von regulären Verbrennungsgeräuschen zu unterscheiden. Glühzündungen, welche nicht schlagartig auftreten, erhöhen das Grundgeräusch der Kopfregelung schleichend und werden deswegen nicht erkannt. Trotz vieler Fortschritte ist es im heutigen Stand der Technik nicht möglich, Glühzündungen immer sicher zu erkennen.

Aufgabe der vorliegenden Erfindung ist es daher ein Verfahren sowie eine Vorrichtung zur Erkennung einer fehlerhaften Funkenbildung einer fremdgezündeten Brennkraftmaschine mit einem oder mehreren Zylindern anzugeben, die u. a. eine Erkennung von Glühzündungen ermöglicht.

Die Erfindung ergibt sich aus den Merkmalen der unabhängigen Ansprüche. Vorteilhafte Weiterbildungen und Ausgestaltungen ergeben sich aus den Unteransprüchen. Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

Das erfindungsgemäße Verfahren zur Erkennung einer fehlerhaften Funkenbildung einer fremdgezündeten Brennkraftmaschine mit einem oder mehreren Zylindern zeichnet sich dadurch aus, dass für ein Fremdzündereignis eines Zylinders in einem Verbrennungszyklus eine zugeordnete Funkenbrenndauer erfasst wird, und einer fehlerhaften Funkenbildung, insbesondere aufgrund von Unregelmäßigkeiten im Brennraum (Glühzündungen, Rußanhäufungen) und/oder im Zusammenhang mit Fehlern bei Zündspulen bzw. Zündkerzen (Keramikschaden bzw. Keramikbruch der Zündkerze) und/oder aufgrund einer fehlerhaften Ansteuerung in dem Zylinder dann erkannt wird, wenn die Funkenbrenndauer oder eine daraus abgeleitete Größe gleich oder größer als ein erster Referenzwert ist.

Unter dem Begriff "Fremdzündereignis" eines Zylinders in einem Verbrennungszyklus wird vorliegend das durch die Zündanlage der Brennkraftmaschine in den entsprechenden Verbrennungszyklen veranlasste Zünden des Kraftstoffluftgemisches durch die Zündkerze verstanden.

Unter dem Begriff "Funkenbrenndauer" wird vorliegend das Zeitintervall verstanden, in dem ein Funke zwischen den Elektroden einer Zündkerze anliegt. Die Funkenbrenndauer kann auf der Primärseite der Zündspule in bekannter Art und Weise ermittelt werden und wird von modernen Motorsteuerungen bereits als Signal bereitgestellt.

Der Erfindung hinsichtlich der Erkennung von Glühzündungen liegt folgende Idee zugrunde: Durch eine Glühzündung wird bekanntermaßen das in einem Zylinder vorhandene Kraftstoff-Luft-Gemisch teilweise ionisiert, bevor die eigentliche Zündung des Kraftstoffgemisches durch die Zündkerze erfolgt. Die im Brennraum vorhandenen Ionen reduzieren die für einen Funkenüberschlag zwischen der Elektroden der Zündkerze erforderliche Spannung. Die von der Zündanlage für die Zündkerze bereitgestellte elektrische Energie zur Erzeugung des Funkenüberschlags fließt somit bei einer geringeren Spannung als der der üblichen Sollspannung ab. Dies verlängert die Funkenbrenndauer, d.h. der Funke der Zündkerze brennt länger als bei einer Verbrennung ohne vorherige Glühzündung.

Bevorzugt wird die Funkenbrenndauer für jedes Fremdzündereignis eines Zylinders erfasst und zur Erkennung einer fehlerhaften Funkenbildung, insbesondere aufgrund von Unregelmäßigkeiten im Brennraum (Glühzündungen, Rußanhäufungen) und/oder im Zusammenhang mit Fehlern bei Zündspulen bzw. Zündkerzen (Keramikschaden bzw. Keramikbruch der Zündkerze) und/oder aufgrund einer fehlerhaften Ansteuerung ausgewertet. Alternativ kann jedes zweite, dritte oder n-te Fremdzündereignis eines Zylinders erfasst und zur Erkennung einer fehlerhaften Funkenbildung ausgewertet werden. Sofern eine Brennkraftmaschine mit mehreren Zylindern vorliegt, wird insbesondere zum Erkennen von Glühzündungen bevorzugt der thermisch am höchsten belastete Zylinder ausgewählt und für diesen Zylinder entsprechende Fremdzündereignisse erfasst und ausgewertet.

In einer weiteren Alternative des Verfahrens werden die Funkenbrenndauern für jedes einzelne Fremdzündereignis eines jeden Zylinders erfasst und zur Erkennung einer fehlerhaften Funkenbildung, insbesondere aufgrund von Unregelmäßigkeiten im Brennraum und/oder im Zusammenhang mit Fehlern bei Zündspulen bzw. Zündkerzen und/oder aufgrund einer fehlerhaften Ansteuerung ausgewertet. Diese Variante liefert die höchste Zuverlässigkeit bei der Erkennung einer fehlerhaften Funkenbildung, weil dabei alle Zylinder der Brennkraftmaschine entsprechend überwacht werden. Weiterhin ermöglicht diese Variante den bestmöglichen Schutz der Brennkraftmaschine vor einer Beschädigung aufgrund von Glühzündungen oder einer defekten Zündkerze, wobei nach einer erfindungsgemäßen Erkennung einer fehlerhaften Funkenbildung eine entsprechend geänderte Motorsteuerung erfolgen muss.

Im Detail kann eine Erkennung einer fehlerhaften Funkenbildung wie folgt vorgenommen werden: In einem ersten Schritt kann die Funkenbrenndauer für jeden Zylinder ermittelt werden. In einem nächsten Schritt wird die ermittelte Funkenbrenndauer genau eines Zylinders (bspw. des ersten Zylinders) mit einem ermittelten Funkenbrenndauer-Mittelwert aus den übrigen Funkenbrenndauern verglichen. Ist die Differenz zwischen dem Einzelwert und dem Mittelwert zu groß, kann auf eine fehlerhafte Funkenbildung geschlossen werden. Zusätzlich können auch noch weitere Kriterien zur Absicherung für die Auswertung herangezogen werden.

Der erste Referenzwert kann abhängig von Lastzuständen der Brennkraftmaschine und/oder abhängig von dem jeweiligen betrachteten Zylinder der Brennkraftmaschine sein.

In einer bevorzugten Ausführungsform des Verfahrens werden die erfassten Funkenbrenndauern zumindest temporär gespeichert. Sie stehen damit für weitere Auswertungen zur Verfügung. Weiterhin wird in dieser Ausführungsform der erste Referenzwert auf Basis von für eine Anzahl vorangehender Verbrennungszyklen erfasster und gespeicherter Funkenbrenndauern jeweils aktuell ermittelt. Damit kann sich der Referenzwert mit der Zeit ändern. Diese Änderung kann bevorzugt auf ein vorgebbares Referenzwert-Intervall eingeschränkt werden.

In einer weiteren bevorzugten Ausführungsform des Verfahrens werden fehlerhafte Funkenbildungen ausschließlich durch das Auswerten von erfassten Funkenbrenndauern erkannt. Zur Verifikation der auf Basis der Funkenbrenndauern ermittelten fehlerhaften Funkenbildung, insbesondere von Glühzündungen oder Kerzenschäden, können in einer weiteren besonders bevorzugten Ausführungsform des Verfahrens zusätzlich für die Brennkraftmaschine pro Zylinder aktuelle Laufunruhewerte ermittelt werden. Eine fehlerhafte Funkenbildung, insbesondere eine Glühzündung in einem Zylinder wird bspw. dann verifiziert, wenn die im selben Verbrennungszyklus, in dem auch die Funkenbrenndauer ermittelt wurde, ein ermittelter Laufunruhewert für diesen Zylinder kleiner als ein zweiter Referenzwert ist. Dieser zweite Referenzwert kann wiederum von den Lastzuständen der Brennkraftmaschine oder dem jeweiligen Zylinder abhängig sein.

Weiterhin ist eine Verifikation der auf Basis der Funkenbrenndauern ermittelten fehlerhaften Funkenbildung, insbesondere der ermittelten Glühzündungen auch mittels einer bekannten Erfassung und Auswertung von Klopfsignalen und/oder Motormomenten und/oder lonenstrommessungen möglich.

In einer besonders bevorzugten Ausführungsform des Verfahrens werden nach einem Erkennen einer Glühzündung in einem Zylinder der Brennkraftmaschine zur Vermeidung weiterer Glühzündungen die Betriebsparameter dieses Zylinders vorzugsweise über die Motorsteuerung entsprechend geändert. Ebenso wird in einer besonders bevorzugten Ausführungsform des Verfahrens nach einem Erkennen einer fehlerhaften Funkenbildung, insbesondere einer defekten Spule und/oder eines Keramikschadens der Zündkerze der Injektor abgeschaltet.

Ein weiterer unabhängiger Gegenstand der Erfindung betrifft eine Vorrichtung zur Erkennung einer fehlerhaften Funkenbildung einer fremdgezündeten Brennkraftmaschine mit einem oder mehreren Zylindern, insbesondere aufgrund von Unregelmäßigkeiten im Brennraum und/oder im Zusammenhang mit Fehlern bei Zündspulen bzw. Zündkerzen und/oder aufgrund einer fehlerhaften Ansteuerung. Die Vorrichtung umfasst ein erstes Mittel, mit dem in einem Verbrennungszyklus für ein Fremdzündereignis eines Zylinders eine zugeordnete Funkenbrenndauer erfassbar ist, und ein zweites Mittel mit dem erfasste Funkenbrenndauer auswertbar ist, wobei eine fehlerhafte Funkenbildung in dem Zylinder dann erkannt wird, wenn die Funkenbrenndauer oder eine daraus abgeleitete Größe gleich oder größer als ein erster Referenzwert ist.

Die vorstehende Beschreibung des erfindungsgemäßen Verfahrens lässt sich in analoger Weise auf die erfindungsgemäße Vorrichtung übertragen, so dass zur Erläuterung und weiteren Beschreibung der Vorrichtung auf die vorstehenden Ausführungen zum erfindungsgemäßen Verfahren verwiesen wird.

Gemäß einer bevorzugten Ausführungsform der Vorrichtung, ist das erste Mittel derart ausgeführt und eingerichtet, dass für jedes Fremdzündereignis eines Zylinders eine zugeordnete Funkenbrenndauer erfassbar ist. Gemäß einer weiteren Ausführungsform der Vorrichtung ist das erste Mittel derart ausgelegt und eingerichtet, dass für jedes Fremdzündereignis jedes Zylinders eine zugeordnete Funkenbrenndauer erfassbar ist. Weiterhin vorzugsweise umfasst die Vorrichtung eine Speichereinheit, in der die erfassten Funkenbrenndauern zumindest temporär speicherbar sind, und ein drittes Mittel, mit dem der erste Referenzwert auf Basis von für eine Anzahl vorangehender Motorumdrehungen erfasster Funkenbrenndauern jeweils aktuell ermittelbar ist.

Eine weitere·bevorzugte Ausführungsform der erfindungsgemäßen Vorrichtung umfasst ein viertes Mittel, mit dem für die Brennkraftmaschine pro Zylinder aktuelle Laufunruhewerte ermittelbar sind, und ein fünftes Mittel, mit dem die ermittelten Laufunruhewerte auswertbar sind, wobei eine fehlerhafte Funkenbildung, insbesondere eine Glühzündung in einem Zylinder dann erkannt wird, wenn die im selben Verbrennungszyklus ermittelte Laufunruhewerte kleiner als ein zweiter Referenzwert sind.

Weitere Vorteile, Merkmale und Einzelheiten der Erfindung ergeben sich aus der nachfolgenden Beschreibung, in der unter Bezugnahme auf die Zeichnungen Ausführungsbeispiele im Einzelnen beschrieben werden. Gleiche, funktionsgleiche und/oder ähnliche Teile sind mit gleichen Bezugszeichen versehen. Es zeigen:
- **Fig. 1**: Schematische Darstellung des erfindungsgemäßen Verfahrens;
- **Fig. 2**: Schematische Darstellung des zeitlichen Verlaufs der Funkenbrenndauer für vier Zylinder;
- **Fig. 3**: Schematische Darstellung des zeitlichen Verlaufs von Laufunruhewerten für vier Zylinder; und
- **Fig. 4**: Schematische Darstellung einer erfindungsgemäßen Vorrichtung.

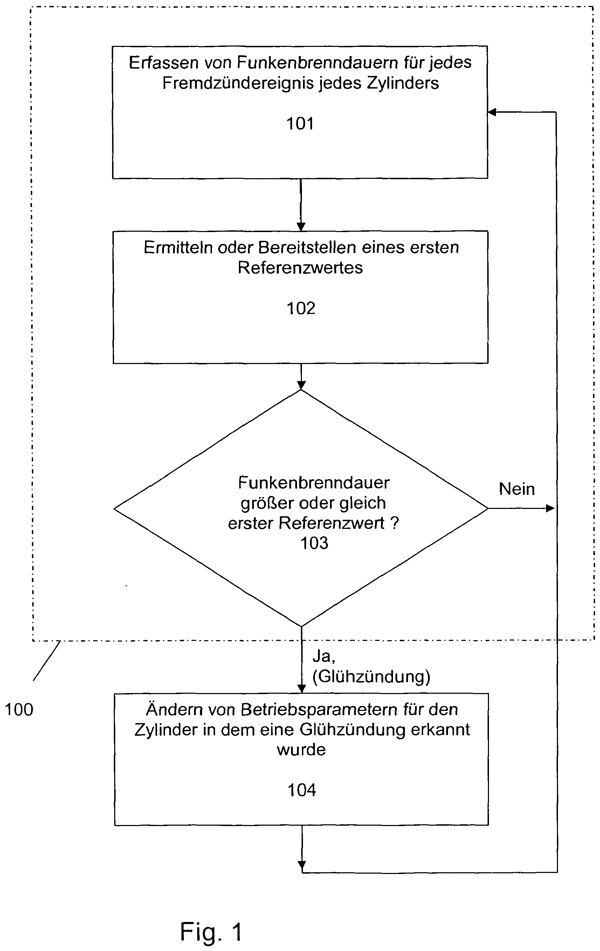

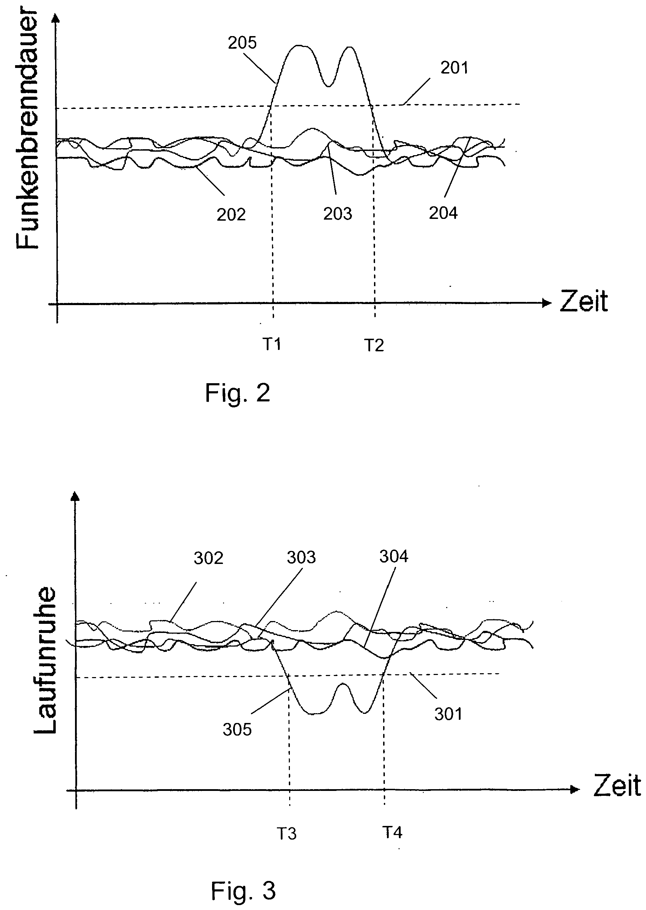

**Fig. 1** zeigt eine schematische Darstellung des erfindungsgemäßen Verfahrens 100. Es sei im Folgenden unterstellt, dass das erfindungsgemäße Verfahren zur Erkennung einer fehlerhaften Funkenbildung, insbesondere von Glühzündungen auf eine fremdgezündete Brennkraftmaschine mit vier Zylindern, d.h. einem VierZylinder-Otto-Motor, angewendet wird. In diesem Ausführungsbeispiel sei weiterhin unterstellt, dass in Schritt 101 für jedes Fremdzündereignis jedes Zylinders in einem Verbrennungszyklus eine zugeordnete Funkenbrenndauer erfasst und ausgewertet wird. Dieses Erfassen erfolgt demnach zeitlich kontinuierlich. Die für die vier Zylinder erfassten Funkenbrenndauern 202, 203, 204, 205 sind schematisch in **Fig. 2** über der Zeit aufgetragen.

In dem Schritt 102 des Verfahrens erfolgt ein Ermitteln oder Bereitstellen eines ersten Referenzwertes 201 der vorliegend für alle Zylinder gleich ist und sich zeitlich nicht ändert. In Schritt 103 des Verfahrens erfolgt die Auswertung der erfassten Funkenbrenndauer durch einen Vergleich mit dem ersten Referenzwert. Ist die Funkenbrenndauer größer oder gleich dem ersten Referenzwert, dann liegt eine fehlerhaften Funkenbildung, wie z. B. eine Glühzündung in dem Zylinder vor, ist sie kleiner als der Referenzwert, so liegt keine Glühzündung vor. In **Fig. 2** erkennt man deutlich, dass die Kurve 205 der erfassten Funkenbrenndauern eines der vier Zylinders den ersten Referenzwert 201 (gestrichelte horizontale Linie) übersteigt. Die in dem Zeitintervall T1 - T2 erfassten Funkenbrenndauern dieses Zylinders kennzeichnen daher das Vorliegen von Glühzündungen.

Der erste Referenzwert 201 wird dabei vorzugsweise für jede Brennkraftmaschine individuell, durch entsprechende Auswertung von Funkenbrenndauern für den gesamten Last- bzw. sicheren Betriebsbereich ermittelt.

Alternativ kann das Verfahren zur Erkennung einer fehlerhaften Funkenbildung wie z. B. einer Glühzündung wie folgt ablaufen. Hierbei werden die Funkenbrenndauern für die vier Zylinder der letzten zwei Motorumdrehungen ausgewertet. Aus diesen Funkenbrenndauern wird zunächst der Zylinder mit der längsten Funkenbrenndauer ermittelt. Die Funkenbrenndauern der anderen Zylinder werden gemittelt. Liegt dabei die Abweichung der Funkenbrenndauer des Zylinders mit der maximalen Funkenbrenndauer zum Mittelwert der Funkenbrenndauern der anderen Zylinder über einem vorgegebenen ersten Referenzwert, so wird eine Glühzündung erkannt. Ebenso kann durch das beschriebene Verfahren auch eine fehlerhafte Funkenbildung aufgrund einer anderen Ursache wie z. B. einer defekten Spule oder eines Keramikschadens der Zündkerze festgestellt werden.

Als zusätzliches Signal zur Verifikation einer Glühzündung wird vorzugweise der Laufunruhewert verwendet. Parallel zur Erfassung der Funkenbrenndauern werden hierzu für jeden der vier Zylinder Laufunruhewerte erfasst. Entsprechende Sensoren sind im Stand der Technik bekannt. **Fig. 3** zeigt hierzu die erfassten Laufunruhewerte 302, 303, 304, 305, aufgetragen über der Zeit für die vier Zylinder. Eine Glühzündung wird in diesem Fall dann erkannt bzw. verifiziert, wenn im selben Verbrennungszyklus ermittelte Laufunruhewerte 302, 303, 304, 305 für einen Zylinder kleiner als ein zweiter Referenzwert 301 sind. Dies ist vorliegend für das Zeitintervall T3 - T4 der Fall. Der entsprechende Zylinder erzeugt aufgrund der Glühzündung dann keine Drehzahländerung bzw. keine Momentenänderung.

Um weitere Glühzündungen zu vermeiden werden im Schritt 104 in besonders bevorzugter Weise die Betriebsparameter für den Zylinder, in dem eine Glühzündung erkannt wurde, zur Vermeidung weiterer Glühzündungen geändert. So kann beispielsweise die Einspritzung von Kraftstoff in diesen Zylinder zeitlich verschoben oder ganz abgeschaltet werden. Beispielsweise kann die Einspritzung von Kraftstoff für die nächsten fünf Verbrennungszyklen abgeschaltet werden. Sofern danach weitere Glühzündungen auftreten, kann diese Abschaltung auch dauerhaft erfolgen.

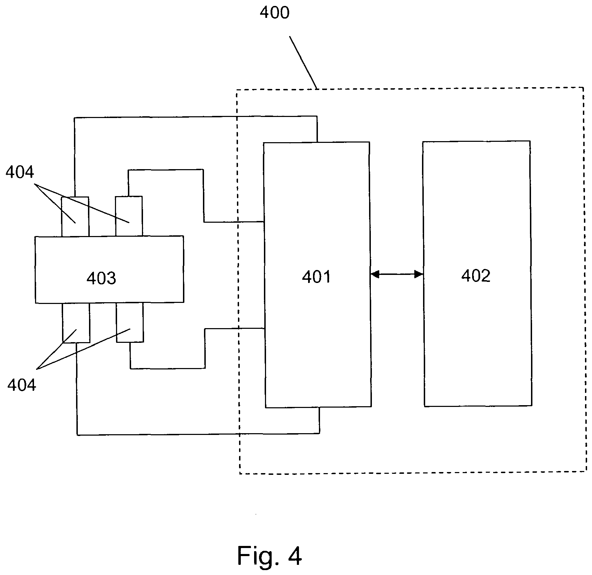

**Fig. 4** zeigt eine schematische Darstellung einer erfindungsgemäßen Vorrichtung 400 zur Erkennung einer fehlerhaften Funkenbildung, insbesondere aufgrund von Glühzündungen und/oder einer defekten Spule und/oder eines Keramikschadens der Zündkerze einer fremdgezündeten Brennkraftmaschine 403. Die Brennkraftmaschine 403 weist vier Zylinder 404 auf. Die erfindungsgemäße Vorrichtung 400 umfasst ein erstes Mittel 401, mit dem für jedes Fremdzündereignis eines jeden der vier Zylinder eine zugeordnete Funkenbrenndauer erfass- und bereitstellbar ist. Zur Erfassung der Funkenbrenndauer ist das erste Mittel zumindest mit der Primärseite der Zündkerzen der jeweiligen Zylinder 404 verbunden. In einer bevorzugten Ausführungsform der Vorrichtung ist das erste Mittel 401 eine Motorsteuerung, in der die Funkenbrenndauern der vier Zylinder 404 erfasst, gespeichert und einem zweiten Mittel 402 bereitgestellt werden. Die Vorrichtung 400 umfasst weiterhin das zweite Mittel 402, das dazu ausgelegt und eingerichtet ist, die vom ersten Mittel 401 bereitgestellten Funkenbrenndauern auszuwerten, wobei eine fehlerhafte Funkenbildung in einem der Zylinder 404 in einem Verbrennungszyklus dann erkannt wird, wenn die zugeordnete Funkenbrenndauer oder eine daraus abgeleitete Größe gleich oder größer als ein erster Referenzwert 201 ist.

## Patentansprüche

1. Verfahren (100) zur Erkennung einer fehlerhaften Funkenbildung einer fremdgezündeten Brennkraftmaschine (403) mit einem oder mehreren Zylindern (404),
**dadurch gekennzeichnet,**
**dass** für ein Fremdzündereignis eines Zylinders (404) in einem Verbrennungszyklus eine Funkenbrenndauer erfasst wird, und eine fehlerhafte Funkenbildung in dem Zylinder (404) dann erkannt wird, wenn die Funkenbrenndauer oder eine daraus abgeleitete Größe gleich oder größer als ein erster Referenzwert ist,
wobei die Funkenbrenndauer für jedes Fremdzündereignis eines Zylinders oder jeden Zylinders erfasst und zur Erkennung eines Keramikschadens der Zündkerze ausgewertet wird.

2. Verfahren gemäß Anspruch 1, **dadurch gekennzeichnet, dass** die erfasste Funkenbrenndauer für jedes Fremdzündungsereignis eines Zylinders oder jeden Zylinders auch zur Erkennung von Glühzündungen und/oder einer defekten Spule und/oder einer fehlerhaften Ansteuerung des Zündsystems ausgewertet wird.

3. Verfahren gemäß Anspruch 1 oder 2,
**dadurch gekennzeichnet,**
**dass** der erste Referenzwert abhängig von Lastzuständen der Brennkraftmaschine und/oder vom jeweiligen Zylinder ist.

4. Verfahren gemäß einem der Ansprüche 1 bis 3,
**dadurch gekennzeichnet,**
**dass** erfasste Funkenbrenndauern zumindest temporär gespeichert werden, und dass der erste Referenzwert auf Basis von für eine Anzahl vorangehender Verbrennungszyklen erfasster oder gespeicherter Funkenbrenndauern jeweils aktuell ermittelt wird.

5. Verfahren gemäß einem der Ansprüche 1 bis 4,
**dadurch gekennzeichnet,**
**dass** für die Brennkraftmaschine pro Zylinder aktuelle Laufunruhewerte ermittelt werden, und
**dass** eine Glühzündung in einem Zylinder dann erkannt wird, wenn die im selben Verbrennungszyklus ermittelten Laufunruhewerte kleiner als ein zweiter Referenzwert sind.

6. Verfahren gemäß Anspruch 5,
**dadurch gekennzeichnet,**
**dass** der zweite Referenzwert abhängig von Lastzuständen der Brennkraftmaschine und/oder von dem jeweiligen Zylinder ist.

7. Verfahren gemäß einem der Ansprüche 1 bis 6,
**dadurch gekennzeichnet,**
**dass** nach einem Erkennen einer Glühzündung in einem Zylinder, zur Vermeidung weiterer Glühzündungen die Betriebsparameter dieses Zylinders entsprechend geändert werden ist.

8. Verfahren gemäß einem der Ansprüche 1 bis 7,
**dadurch gekennzeichnet,**
**dass** nach einem Erkennen einer defekten Spule der Zündkerze und/oder eines Keramikschadens der Injektor abgeschaltet wird.

9. Vorrichtung zur Erkennung einer fehlerhaften Funkenbildung einer fremdgezündeten Brennkraftmaschine mit einem oder mehreren Zylindern, mit
- einem ersten Mittel, mit dem in einem Verbrennungszyklus für ein Fremdzündereignis eines Zylinders eine Funkenbrenndauer erfassbar ist, und
- einem zweiten Mittel, mit dem die erfasste Funkenbrenndauer auswertbar ist, wobei eine Keramikschaden der Zündkerze in dem Zylinder dann erkannt wird, wenn die Funkenbrenndauer oder eine daraus abgeleitete Größe gleich oder größer als ein erster Referenzwert ist, wobei mit dem ersten Mittel für jedes Fremdzündereignis eines Zylinders oder jedes Zylinders eine zugeordnete Funkenbrenndauer erfassbar ist.

10. Vorrichtung gemäß Anspruch 9,
**dadurch gekennzeichnet,**
**dass** eine Speichereinheit vorhanden ist, in der die erfassten Funkenbrenndauern zumindest temporär speicherbar sind, und
**dass** ein drittes Mittel vorhanden ist, mit dem der erste Referenzwert auf Basis von für eine Anzahl vorangehenden Motorumdrehungen erfasster Funkenbrenndauern jeweils aktuell ermittelbar ist.

11. Vorrichtung gemäß Anspruch 9 oder 101,
**dadurch gekennzeichnet,**
**dass** ein viertes Mittel vorhanden ist, mit dem für die Brennkraftmaschine pro Zylinder aktuelle Laufunruhewerte ermittelbar sind, und
**dass** ein fünftes Mittel vorhanden ist, mit dem die ermittelten Laufunruhewerte auswertbar sind, wobei eine Glühzündung in einem Zylinder dann erkannt wird, wenn im selben Verbrennungszyklus ermittelte Laufunruhewerte kleiner als ein zweiter Referenzwert sind.

## Claims

1. A method (100) for recognising faulty spark formation of an externally ignited internal combustion engine (403) with one or more cylinders (400),
**characterised in that**
a spark combustion duration is detected for an external ignition event of a cylinder (404) in a combustion cycle, and faulty spark formation in the cylinder (404) is recognised when the spark combustion duration or a variable derived therefrom is the same as or greater than a first reference value,
wherein the spark combustion duration is detected for each external ignition event of a cylinder or each cylinder and is evaluated in order to recognise ceramic damage of the spark plug.

2. A method according to claim 1, **characterised in that** the detected ignition combustion duration for each external ignition event of a cylinder or each cylinder is also evaluated in order to recognise pre-ignitions and/or a faulty coil and/or faulty activation of the ignition system.

3. A method according to claim 1 or 2,
**characterised in that**
the first reference value is dependent on load states of the internal combustion engine and/or the cylinder in question.

4. A method according to any one of claims 1 to 3,
**characterised in that**
detected spark combustion durations are stored at least temporarily, and **in that** the first reference value is determined in each case on the basis of spark combustion durations detected or stored for a number of previous combustion cycles.

5. A method according to any one of claims 1 to 4,
**characterised in that**
current uneven running values are determined for the internal combustion engine per cylinder, and
**in that** a pre-ignition in a cylinder is recognised when the uneven running values in the same combustion cycle are lower than a second reference value.

6. A method according to claim 6,
**characterised in that**
the second reference value is dependent on load states of the internal combustion engine and/or the cylinder in question.

7. A method according to any one of claims 1 to 6,
**characterised in that**
once a pre-ignition has been recognised in a cylinder, the operating parameters of this cylinder will be changed accordingly so as to avoid further pre-ignitions.

8. A method according to any one of claims 1 to 7,
**characterised in that**
once a faulty coil of the spark plug and/or ceramic damage have/has been recognised, the injector is switched off.

9. A device for recognising faulty spark formation of an externally ignited internal combustion engine with one or more cylinders, comprising
- a first means, with which a spark combustion duration can be detected for an external ignition event of a cylinder in a combustion cycle, and
- a second means, with which the detected spark combustion duration can be evaluated, wherein ceramic damage of the spark plug in the cylinder is recognised when the spark combustion duration or a variable derived therefrom is the same as or greater than a first reference value, wherein an associated spark combustion duration can be detected for each external ignition event of a cylinder or each cylinder using the first means.

10. A device according to claim 9,
**characterised in that**
a storage unit is provided, in which the detected spark combustion durations can be stored at least temporarily, and
**in that** a third means is provided, with which the first reference value can be determined on the basis of spark combustion durations detected for a number of previous engine revolutions.

11. A device according to claim 9 or 10,
**characterised in that**
a fourth means is provided, with which current uneven running values can be determined for the internal combustion engine per cylinder, and
**in that** a fifth means is provided, with which the determined uneven running values can be evaluated, wherein a pre-ignition in a cylinder is recognised when uneven running values determined in the same combustion cycle are lower than a second reference value.

## Revendications

1. Procédé (100) permettant d'identifier une formation défectueuse d'étincelle dans un moteur à combustion interne (403) à allumage commandé comportant au moins un cylindre (404),
**caractérisé en ce que**
lors d'un événement d'allumage externe d'un cylindre (404), on détecte la durée de combustion de l'étincelle pendant un cycle de combustion, et on identifie ensuite la formation défectueuse d'une étincelle dans le cylindre (404) lorsque la durée de combustion de l'étincelle ou une grandeur dérivant de celle-ci est égale ou supérieure à une première valeur de référence,
la durée de combustion de l'étincelle pour chaque événement d'allumage externe d'un cylindre ou de chaque cylindre étant détectée, et exploiter pour identifier un endommagement de la céramique de la bougie d'allumage.

2. Procédé conforme à la revendication 1,
**caractérisé en ce que**
la durée de combustion d'une étincelle détectée pour chaque événement d'allumage externe d'un cylindre ou de chaque cylindre est également exploitée pour identifier des autres allumages et/ou une bobine défectueuse et/ou une commande défectueuse du système d'allumage.

3. Procédé conforme à la revendication 1 ou 2,
**caractérisé en ce que**
la première valeur de référence dépend des états de charge du moteur à combustion interne et/ou des cylindres respectifs.

4. Procédé conforme à l'une des revendications 1 à 3,
**caractérisé en ce que**
des durées de combustion d'étincelle détectées sont enregistrées au moins temporairement, et la première valeur de référence est respectivement déterminée de manière actuelle sur le fondement de durées de combustion d'étincelle détectées ou enregistrées pour plusieurs cycles de combustion précédents.

5. Procédé conforme à l'une des revendications 1 à 4,
**caractérisé en ce que**
des valeurs d'irrégularités de fonctionnement actuelles sont déterminées pour chaque cylindre du moteur à combustion interne, et
un auto-allumage dans un cylindre est ensuite identifié lorsque les valeurs d'irrégularités de fonctionnement déterminées dans un même cycle de combustion sont inférieures à une seconde valeur de référence.

6. Procédé conforme à la revendication 5,
**caractérisé en ce que**
la seconde valeur de référence dépend des états de charge du moteur à combustion interne et/ou de chaque cylindre.

7. Procédé conforme à l'une des revendications 1 à 6,
**caractérisé en ce qu'**
après l'identification d'un auto-allumage dans un cylindre, le paramètre de fonctionnement de ce cylindre est modifié en conséquence pour éviter d'autre auto-allumages.

8. Procédé conforme à l'une des revendications 1 à 7,
**caractérisé en ce que**
après l'identification d'une bobine défectueuse de la bobine d'allumage et/ou d'un endommagement de la céramique, l'injecteur est coupé.

9. Dispositif permettant d'identifier la formation d'étincelle défectueuse dans un moteur à combustion interne à allumage externe comportant au moins un cylindre, comprenant :
des premiers moyens permettant de détecter la durée de combustion de l'étincelle pendant un cycle de combustion lors d'un événement d'allumage externe d'un cylindre, et
des seconds moyens permettant d'exploiter la durée de combustion de l'étincelle détectée,
un endommagement de la céramique de la bougie d'allumage dans le cylindre étant ensuite identifié lorsque la durée de combustion de l'étincelle ou une grandeur dérivée de celle-ci est égale ou supérieure à une première valeur de référence, les premiers moyens permettant de détecter une durée de combustion de l'étincelle associée pour chaque événement d'allumage externe d'un cylindre ou de chaque cylindre.

10. Dispositif conforme à la revendication 9,
**caractérisé en ce qu'**
il est prévu une unité de mémoire dans laquelle les durées de combustion de l'étincelle détectées peuvent être enregistrées au moins de manière temporaire, et
il est prévu des troisièmes moyens permettant de détecter respectivement de manière actuelle la première valeur de référence sur le fondement des durées de combustion d'étincelle détectées pour plusieurs tours du moteur précédents.

11. Dispositif conforme à la revendication 9 ou 10,
**caractérisé en ce qu'**
il est prévu des quatrièmes moyens permettant de déterminer pour chaque cycle de moteur à combustion interne, des valeurs d'irrégularités de fonctionnement actuels, et
il est prévu des cinquièmes moyens permettant d'exploiter les valeurs d'irrégularité de fonctionnement déterminées, un auto-allumage dans un cylindre étant ensuite identifié lorsque dans un même cycle de combustion les valeurs d'irrégularités de fonctionnement déterminées sont inférieures à une seconde valeur de référence.
